# EUROPEAN PATENT SPECIFICATION

(11) **EP 3 321 490 B1**
(45) Date of publication and mention of the grant of the patent: **15.06.2022**
(21) Application number: 17201158.7
(22) Date of filing: 10.11.2017
(51) Int. Cl.: F02C 6/08, F02C 7/32

(54) **TURBO-GENERATOR BASED BLEED AIR SYSTEM**
TURBOGENERATORBASIERTES ZAPFLUFTSYSTEM
SYSTÈME DE PRÉLÈVEMENT D'AIR À BASE DE TURBO-GÉNÉRATEUR

(30) Priority: 14.11.2016 US 201615351015
(43) Date of publication of application: 16.05.2018
(73) Proprietor: Hamilton Sundstrand Corporation, Charlotte, NC 28217 (US)
(72) Inventor: HIMMELMANN, Richard A., Beloit, WI Wisconsin 53511 (US); TONGUE, Stephen E., Hampden, MA Massachusetts 01036 (US)
(74) Representative: Dehns

(56) References cited:
- EP-A2- 1 283 166
- WO-A1-2015/026431
- US-A1- 2010 314 877
- US-B1- 6 189 324

## Description

### BACKGROUND

This application relates to an aircraft, and more particularly, to a bleed air system for supplying air to one or more aircraft systems including an environmental control system.

Commercial aircraft or jetliners typically employ an environmental control system to pressurize a passenger cabin of the aircraft and/or thermal anti-icing systems to provide heated air for anti-icing applications. Air supply to these systems is typically provided by bleed air extracted from or provided by a compressor of an aircraft engine.

To meet pressure and/or temperature demands of the various aircraft systems, bleed air is often extracted from a high stage of a low-pressure compressor of the aircraft engine. For example, bleed air is often extracted from an eighth stage compressor of an aircraft engine. The pressurized bleed air is then often cooled via a precooler and a pressure regulating valve prior to providing the bleed air to a system of the aircraft (e.g., environmental control system). Thus, a portion of the energy spent by the engine to produce the bleed air is wasted when cooling the bleed air via the precooler and reducing the pressure of the bleed air at the pressure regulating valve. This reduction in temperature and pressure dissipates the energy imparted to the bleed air by the engine without recovering it. This reduction in the efficiency of the bleed air system causes the engine to burn more fuel, thereby reducing the aircraft's overall fuel efficiency. WO 2015/026431 A1 relates to aircraft environmental control systems.

### SUMMARY

Disclosed herein is an aircraft as claimed in claim 1.

Also disclosed herein is a method of operating a bleed air system of an aircraft as claimed in claim 10.

### BRIEF DESCRIPTION OF THE DRAWINGS

The following descriptions should not be considered limiting in any way. With reference to the accompanying drawings, like elements are numbered alike:
Fig. 1 is an example of an aircraft having one or more engines;
Fig. 2 is a cross-sectional diagram of a gas turbine engine of an aircraft according to one embodiment;
Fig. 3 is a schematic of a bleed air system for use with an aircraft engine according to an example not falling within the scope of the invention as claimed;
FIG. 4 is a schematic of a bleed air system for use with an aircraft engine according to one embodiment; and
FIG. 5 is a cross-sectional diagram of an example of a turbo-generator of the bleed air system according to an embodiment.

### DETAILED DESCRIPTION

A detailed description of one or more embodiments of the disclosed system is presented herein by way of exemplification and not limitation with reference to the Figures. It is to be understood that other embodiments may be utilized and changes may be made without departing from the scope of the present disclosure.

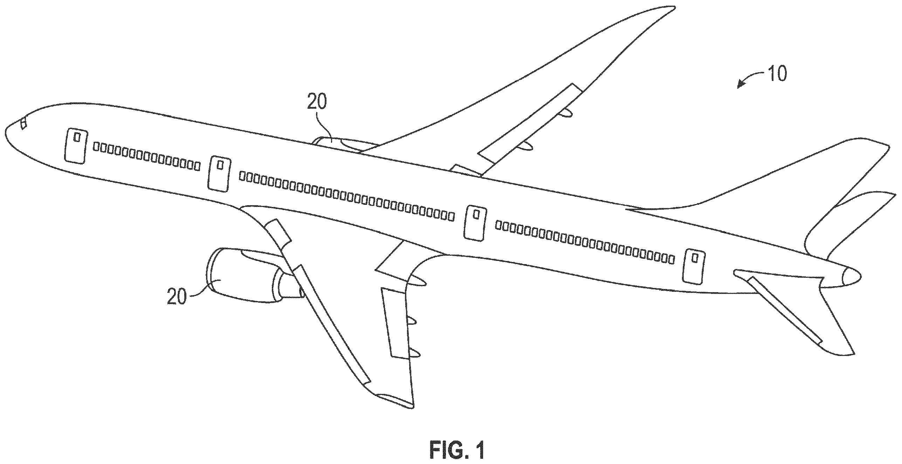

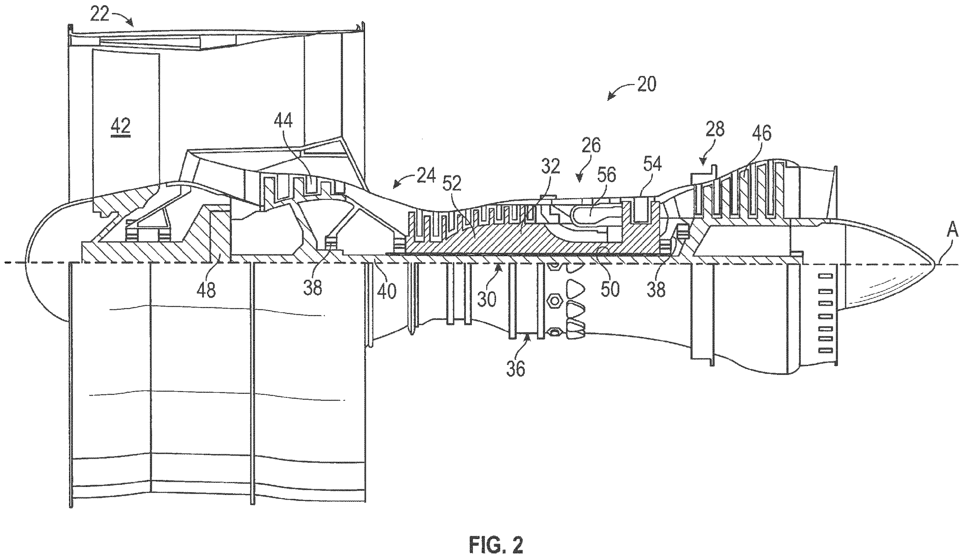

FIG. 1 illustrates an example of a commercial aircraft 10 having aircraft engines 20 that may embody aspects of the teachings of this disclosure. With reference to FIG. 2, an example of a gas turbine engine 20 configured for use in the aircraft 10 is illustrated schematically. The gas turbine engine 20 disclosed herein is a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path while the compressor section 24 drives air along a core flow path for compression and communication into the combustor section 26 and then expansion through the turbine section 28. Although depicted as a turbofan gas turbine engine 20 in the disclosed non-limiting embodiment, it should be understood that the concepts described herein are not limited to use with turbofans as the teachings may be applied to other types of turbine engines, such as three-spool architectures for example.

The engine 20 generally includes a low spool 30 and a high spool 32 mounted for rotation about an engine central longitudinal axis A relative to an engine static structure 36 via several bearing systems 38. It should be understood that various bearing systems 38 at various locations may alternatively or additionally be provided.

The low spool 30 generally includes an inner shaft 40 that interconnects a fan 42, a low pressure compressor 44, and a low pressure turbine 46. The inner shaft 40 may be connected to the fan 42 directly or through a geared architecture 48 to drive the fan 42 at a different, typically lower, speed than the low spool 30. The high spool 32 includes an outer shaft 50 that interconnects a high pressure compressor 52 and a high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 54, 46 rotationally drive the respective low spool 30 and high spool 32 in response to the expansion.

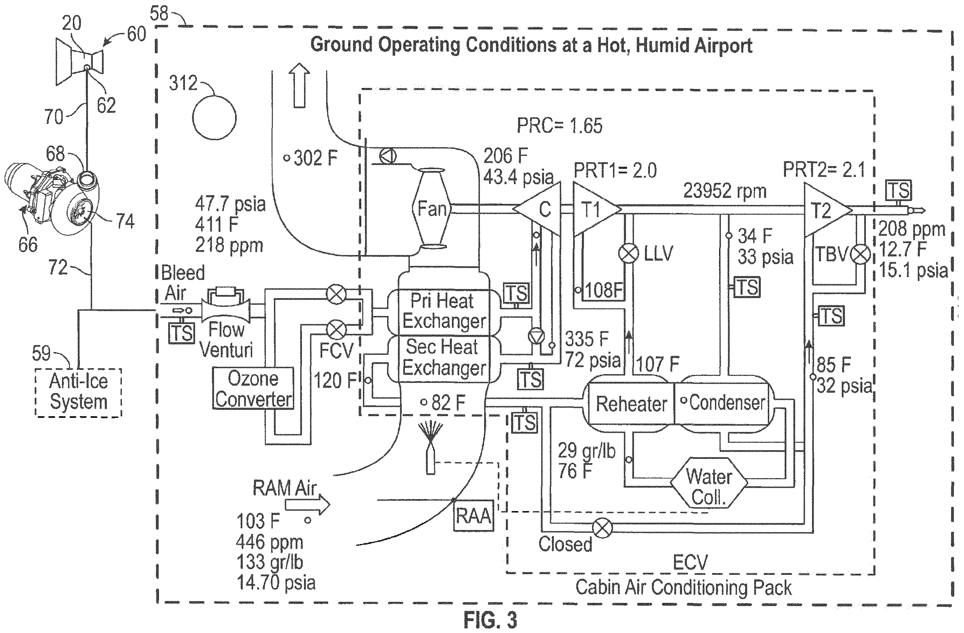

Referring now to FIG. 3, each engine 20 of the aircraft 10 may employ a dedicated bleed air system 60, or the plurality of engines 20 may employ a common bleed air system 60. The bleed air system 60 provides compressed or pressurized air to one or more aircraft systems such as, for example, an environmental control system, illustrated schematically at 58, to pressurize the cabin of an aircraft 10. Alternatively, or in addition, the bleed air may be used for anti-icing or deicing, heating or cooling, and/or operating pneumatic equipment, as illustrated schematically at 59.

The bleed air system 60 includes at least one port 62 for extracting air at various stages of the engine the engine 20. In the illustrated, non-limiting example of FIG. 3, the system 60 includes one or more ports 62 configured to bleed high pressure air from a portion of the high pressure spool 32, such as the high pressure compressor 52 for example. In such examples, the air drawn from the port 62 may have a maximum temperature of about 649°C (1200°F) and a maximum pressure of about 2068 kPa (300 psia).

The bleed air system 60 additionally includes a turbo-generator 66. An inlet 68 of the turbo-generator 66 is arranged in fluid communication with the first port 62 via a first bleed passage 70. An outlet passage 72 extends from an outlet 74 of the turbo-generator 66 to one or more aircraft systems 58, 59.

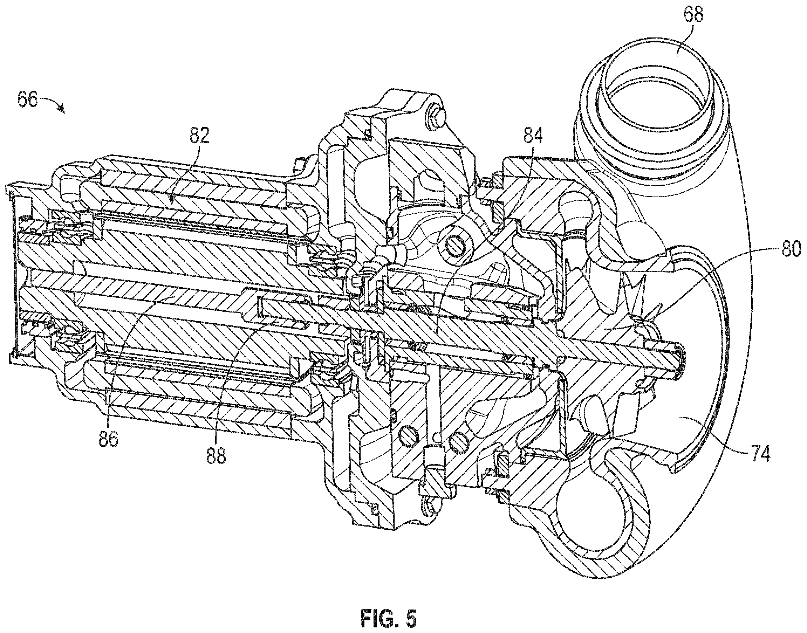

An example of a turbo-generator 66 for use in the bleed air system 60 is illustrated in more detail in FIG. 5. The turbo-generator 66 includes a turbine 80 that directly drives an electric generator 82. In the illustrated, non-limiting embodiment, the turbine 80 is mounted on a shaft 84 and the electric generator 82 includes a shaft 86. A coupler 88, separate from or integrally formed with one of the shafts 84, 86, operably couples the turbine shaft 84 and the generator shaft 86 such that rotation of the turbine shaft 84 is transmitted to the generator shaft 86. Rotation of the turbine 80, driven by the flow of bleed air provided at an inlet opening 68, drives rotation of the generator shaft 86. Accordingly, rotation of the turbine 80 extracts energy from the bleed air and converts it into electrical energy via the generator 82. The energy created at the generator 82 may be stored, or alternatively, may be sent to an aircraft bus (not shown) where it is then supplied to one or more electrical loads of the aircraft 10.

The operational parameters of the turbo-generator 66 may be varied to achieve a desired reduction in not only pressure, but also temperature of the bleed air. For example, if the temperature of the bleed air requires cooling, the current flow from the generator 82 may be increased causing the generator 82 to develop more input torque. The increased torque will result in slower rotation of the turbine 80 causing more energy to be extracted from the bleed air before exiting from an outlet 74 of the turbo-generator 66.

With reference again to FIG. 3, in examples of the bleed air system 60 having one or more ports 62 for extracting high pressure air from the engine 20, the energy of the bleed air provided to the system 60 will always exceed the energy demands of the one or more aircraft systems 58, 59 located downstream therefrom. Accordingly, during operation of the bleed air system 60, the turbo-generator 66 will always extract at least some energy from the bleed air provided thereto while reducing the pressure and/or the temperature of the bleed air. In an embodiment, the turbo-generator 66 is configured to reduce the temperature of the bleed air to less than 232°C (450°F) and reduce the pressure of the bleed air to less than 345 kPa (50 psia).

The amount of energy extracted from the bleed air drawn from port 62 will vary based on the demands of the aircraft system 58, 59. For example, when the aircraft is cruising, the energy demands of the aircraft systems 58, 59 are generally low. As a result, a substantial amount of energy may be extracted from the high pressure bleed air and converted into electrical energy to be supplied to the electrical loads of the aircraft 10. However, when the aircraft engines 20 are idling, such as during descent or when the aircraft 10 is on the ground for example, the energy demands of the aircraft systems 58, 59 increase. Because the energy of the high pressure air drawn from the port 62 exceeds these increased demands of the aircraft systems 58, 59, the turbo-generator 66 will still extract energy from the bleed air. However, the amount of energy extracted from the bleed air when the engines 20 are idling will be less than when the engines 20 are creating thrust, such as during cruise for example.

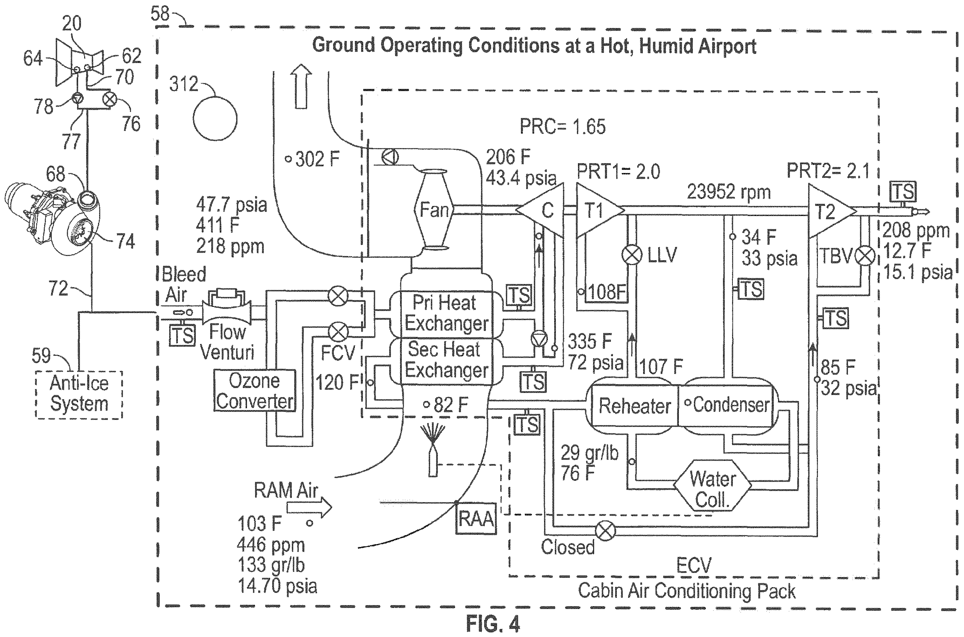

With reference now to FIG. 4, in an embodiment the bleed air system 60 includes one or more first ports 62 configured to bleed high pressure air and one or more second ports 64 configured to draw low pressure air from the engine 20. The bleed air extracted from the low pressure port 64 may have a maximum temperature of about 427°C (800°F) and a maximum pressure of about 1034 kPa (150 psia). The first port 62 may bleed air from a portion of the high pressure spool 32, such as the high pressure compressor 52 for example, and the second port 64 may bleed air from a portion of the low pressure spool 30, such as the low pressure compressor 44 for example. However, it should be understood that the indication of "low pressure" and "high pressure" with respect to the ports is a relative term indicating that the high pressure port is at a location of higher pressure than the location of the low pressure port. Accordingly, the first port 62 and the second port 64 may be located at other positions relative to the engine.

In embodiments where the bleed air system 60 includes a first port 62 for drawing relatively high pressure air and a second port 64 for drawing relatively low pressure air, as shown in FIG. 4, a valve 76 may be located within the bleed passage 70 extending between the first port 62 and the inlet of the turbo-generator 66. A second bleed passage 77 fluidly couples the second port 64 to the turbo-generator inlet 68. In an embodiment, the second bleed passage 77 is connected to the first bleed passage 70 upstream from the inlet 68. In such embodiments, a one way check valve 78 may be located along the second bleed passage 70 between the second port 64 and the inlet 68 to prevent the flow of bleed air from the first port 62 back to the engine 20 via the second port 64.

Depending on the demands of the aircraft 10, bleed air is selectively drawn from one of the first port 62 and the second port 64 and provided to the turbo-generator 66. In most flight situations, the demands of the aircraft systems 58, 59 are low and therefore low pressure air is drawn from the second port 64. Because the energy of the air from port 64 exceeds the energy demand of the aircraft systems 58, 59, electrical energy is created as the air passes through the turbo-generator 66. In flight situations where the engine 20 is in a low throttle state, such as during ground maneuvers for example, the bleed air from the low pressure port 64 does not provide enough energy to meet the demands of the aircraft systems 58, 59. In such situations, the valve 76 is operated and high pressure air drawn from the first port 62 is provided to the turbo-generator 66. Excess energy is extracted from the high pressure air before it is provided to one or more of the aircraft systems 58, 59. Within the turbo-generator 66, the excess energy extracted from both the low pressure air and the high pressure air is converted to electricity which may be supplied to the electrical demands of the aircraft 10.

The bleed air system 60 illustrated and described herein eliminates the need for bleed air hardware including valves and a pre-cooler, thereby increasing the reliability of the bleed air system. Further, by capturing excess energy of the bleed air, the bleed air system 60 which further increases the fuel efficiency of the aircraft.

While the invention has been described with reference to one or more embodiments, it will be understood by those skilled in the art that various changes may be made without departing from the scope of the invention a defined by the appended claims.

## Claims

1. An aircraft comprising a gas turbine engine and an aircraft system, the gas turbine engine comprising an engine bleed air system (60) providing air to the aircraft system (158), comprising:
a first port (62) for extracting high pressure bleed air from an engine; and
a turbo-generator (66) having a turbine and a generator, the generator being driven by rotation of the turbine;
a first bleed passage (70) fluidly coupling the first port (62) and an inlet of the turbo-generator (66);
a second port (64) for extracting low pressure bleed air from the engine; and
a second bleed passage (77) fluidly coupling the second port and the inlet of the turbo-generator; and
a valve (76) located within the first bleed passage (70) between the first port (62) and the inlet of the turbo-generator, the valve being operable to control a flow of air from the first port (62) and the second port (64) to the inlet; and
a one way check valve positioned within the second bleed passage (77) downstream from the second port (64) but upstream from an interface between the first bleed passage (70) and the second bleed passage (77);
wherein air is selectively provided to the turbo-generator (66) from one of the first port (62) and the second port (64) in response to a demand of the aircraft system (58);
**characterised in that**:
the engine bleed air system (60) further comprises an outlet passage (72) fluidly coupling an outlet of the turbo-generator (66) and the aircraft system (58); and
the aircraft system (58) includes an environmental control system.

2. The aircraft of claim 1, wherein the first port (62) is configured to bleed air from a high pressure compressor of a high pressure spool of the engine.

3. The aircraft of claim 1, wherein the turbo-generator (66) is configured to reduce at least one of a pressure and temperature of the bleed air.

4. The aircraft of claim 1, wherein the turbo-generator (66) extracts energy from the bleed air and converts it into electrical energy via the generator.

5. The aircraft of claim 4, wherein an amount of energy extracted from the bleed air varies based on a demand of the aircraft system.

6. The aircraft of claim 1, wherein the aircraft system (58) includes an anti-icing system.

7. The aircraft of claim 1, wherein the second port (64) is configured to bleed air from a low pressure compressor of a low pressure spool of the engine.

8. The aircraft of claim 1, wherein bleed air from the second port (64) is selectively provided to the turbo-generator (66) when an energy of the bleed air from the second port (64) exceeds a demand of the aircraft system (58).

9. The aircraft of claim 8, wherein bleed air from the first port (62) is provided to the turbo-generator (66) when an energy of the bleed air from the second port (64) is less than the demand of the aircraft system (58) and an energy of the bleed air from the first port (62) exceeds the demand of the aircraft system (58).

10. A method of operating the bleed air system of the aircraft of claim 1, the method comprising:
drawing bleed air from the engine;
determining a demand of the aircraft system;
selectively providing the bleed air to the turbo generator from one of the first port (62) for extracting high pressure bleed air from the engine or the second port (64) for extracting low pressure bleed air from the engine;
extracting energy from the bleed air in the turbo-generator; and
providing the bleed air to the aircraft system.

11. The method of claim 10, further comprising reducing at least one of a pressure and a temperature of the bleed air within the turbo-generator.

12. The method of claim 10, further comprising:
drawing bleed air from the first port if an energy of the bleed air at the first port is greater than the demand of the one or more aircraft systems; and
drawing bleed air from the second port if the energy of the bleed air at the first port is less than the demand of the one or more aircraft systems and if an energy of the bleed air at the second port is the greater than the demand of the one or more aircraft systems.

## Patentansprüche

1. Luftfahrzeug, das ein Gasturbinentriebwerk und ein Luftfahrzeugsystem umfasst, wobei das Gasturbinentriebwerk ein Triebwerkzapfluftsystem (60) umfasst, das dem Luftfahrzeugsystem (158) Luft bereitstellt, umfassend:
einen ersten Anschluss (62) zum Extrahieren von Hochdruckzapfluft aus einem Triebwerk; und
einen Turbogenerator (66), der eine Turbine und einen Generator aufweist, wobei der Generator durch Rotation der Turbine angetrieben wird;
einen ersten Zapfkanal (70), der den ersten Anschluss (62) und einen Einlass des Turbogenerators (66) fluidisch koppelt;
einen zweiten Anschluss (64) zum Extrahieren von Niederdruckzapfluft aus dem Triebwerk; und
einen zweiten Zapfkanal (77), der den zweiten Anschluss und den Einlass des Turbogenerators fluidisch koppelt; und
ein Ventil (76), das sich innerhalb des ersten Zapfkanals (70) zwischen dem ersten Anschluss (62) und dem Einlass des Turbogenerators befindet, wobei das Ventil betätigbar ist, um einen Luftstrom von dem ersten Anschluss (62) und dem zweiten Anschluss (64) zum Einlass zu steuern; und
ein Einwegsperrventil, das innerhalb des zweiten Zapfkanals (77) stromabwärts des zweiten Anschlusses (64), aber stromaufwärts einer Grenzfläche zwischen dem ersten Zapfkanal (70) und dem zweiten Zapfkanal (77) positioniert ist;
wobei Luft dem Turbogenerator (66) selektiv von einem von dem ersten Anschluss (62) und dem zweiten Anschluss (64) als Reaktion auf einen Bedarf des Luftfahrzeugsystems (58) bereitgestellt wird;
**dadurch gekennzeichnet, dass**:
das Triebwerkzapfluftsystem (60) ferner einen Auslasskanal (72) umfasst, der einen Auslass des Turbogenerators (66) und das Luftfahrzeugsystem (58) fluidisch koppelt; und
das Luftfahrzeugsystem (58) ein Umweltkontrollsystem beinhaltet.

2. Luftfahrzeug nach Anspruch 1, wobei der erste Anschluss (62) dazu konfiguriert ist, Luft aus einem Hochdruckverdichter einer Hochdruckwelle des Triebwerks zu zapfen.

3. Luftfahrzeug nach Anspruch 1, wobei der Turbogenerator (66) dazu konfiguriert ist, mindestens eines von einem Druck und einer Temperatur der Zapfluft zu reduzieren.

4. Luftfahrzeug nach Anspruch 1, wobei der Turbogenerator (66) Energie aus der Zapfluft extrahiert und sie über den Generator in elektrische Energie umwandelt.

5. Luftfahrzeug nach Anspruch 4, wobei eine Energiemenge, die aus der Zapfluft extrahiert wird, basierend auf einem Bedarf des Luftfahrzeugsystems variiert.

6. Luftfahrzeug nach Anspruch 1, wobei das Luftfahrzeugsystem (58) ein Vereisungsschutzsystem beinhaltet.

7. Luftfahrzeug nach Anspruch 1, wobei der zweite Anschluss (64) dazu konfiguriert ist, Luft aus einem Niederdruckverdichter einer Niederdruckwelle des Triebwerks zu zapfen.

8. Luftfahrzeug nach Anspruch 1, wobei Zapfluft aus dem zweiten Anschluss (64) dem Turbogenerator (66) selektiv bereitgestellt wird, wenn eine Energie der Zapfluft aus dem zweiten Anschluss (64) einen Bedarf des Luftfahrzeugsystems (58) übersteigt.

9. Luftfahrzeug nach Anspruch 8, wobei Zapfluft aus dem ersten Anschluss (62) dem Turbogenerator (66) bereitgestellt wird, wenn eine Energie der Zapfluft aus dem zweiten Anschluss (64) geringer als der Bedarf des Luftfahrzeugsystems (58) ist und eine Energie der Zapfluft aus dem ersten Anschluss (62) den Bedarf des Luftfahrzeugsystems (58) übersteigt.

10. Verfahren zum Betreiben des Zapfluftsystems des Luftfahrzeugs nach Anspruch 1, wobei das Verfahren umfasst:
Ziehen von Zapfluft aus dem Triebwerk;
Ermitteln eines Bedarfs des Luftfahrzeugsystems;
selektives Bereitstellen der Zapfluft für den Turbogenerator aus einem von dem ersten Anschluss (62) zum Extrahieren von Hochdruckzapfluft aus dem Triebwerk oder dem zweiten Anschluss (64) zum Extrahieren von Niederdruckzapfluft aus dem Triebwerk;
Extrahieren von Energie aus der Zapfluft in dem Turbogenerator; und
Bereitstellen der Zapfluft für das Luftfahrzeugsystem.

11. Verfahren nach Anspruch 10, ferner Reduzieren mindestens eines von einem Druck und einer Temperatur der Zapfluft innerhalb des Turbogenerators umfassend.

12. Verfahren nach Anspruch 10, ferner umfassend:
Ziehen von Zapfluft aus dem ersten Anschluss, wenn eine Energie der Zapfluft an dem ersten Anschluss größer als der Bedarf des einen oder der mehreren Luftfahrzeugsysteme ist; und
Ziehen von Zapfluft aus dem zweiten Anschluss, wenn die Energie der Zapfluft an dem ersten Anschluss geringer als der Bedarf des einen oder der mehreren Luftfahrzeugsysteme ist und wenn eine Energie der Zapfluft an dem zweiten Anschluss größer als der Bedarf des einen oder der mehreren Luftfahrzeugsysteme ist.

## Revendications

1. Aéronef comprenant un moteur à turbine à gaz et un système d'aéronef, le moteur à turbine à gaz comprenant un système de prélèvement d'air moteur (60) fournissant de l'air au système d'aéronef (158), comprenant :
un premier orifice (62) pour extraire de l'air de prélèvement haute pression d'un moteur ; et
un turbogénérateur (66) ayant une turbine et un générateur, le générateur étant entraîné par la rotation de la turbine ;
un premier passage de prélèvement (70) couplant fluidiquement le premier orifice (62) et une entrée du turbogénérateur (66) ;
un second orifice (64) pour extraire de l'air de prélèvement basse pression du moteur ; et
un second passage de prélèvement (77) couplant fluidiquement le second orifice et l'entrée du turbogénérateur ; et
une vanne (76) située dans le premier passage de prélèvement (70) entre le premier orifice (62) et l'entrée du turbogénérateur, la vanne pouvant fonctionner pour contrôler un flux d'air du premier orifice (62) et du second orifice (64) à l'entrée ; et
un clapet anti-retour unidirectionnel positionné dans le second passage de purge (77) en aval du second orifice (64) mais en amont d'une interface entre le premier passage de prélèvement (70) et le second passage de prélèvement (77) ;
dans lequel de l'air est sélectivement fourni au turbogénérateur (66) depuis l'un du premier orifice (62) et du second orifice (64) en réponse à une demande du système d'aéronef (58) ;
**caractérisé en ce que** :
le système de prélèvement d'air moteur (60) comprend en outre un passage de sortie (72) couplant fluidiquement une sortie du turbogénérateur (66) et le système d'aéronef (58) ; et
le système d'aéronef (58) comporte un système de contrôle environnemental.

2. Aéronef selon la revendication 1, dans lequel le premier orifice (62) est configuré pour prélever de l'air d'un compresseur haute pression d'un corps haute pression du moteur.

3. Aéronef selon la revendication 1, dans lequel le turbogénérateur (66) est configuré pour réduire au moins l'une d'une pression et d'une température de l'air de prélèvement.

4. Aéronef selon la revendication 1, dans lequel le turbogénérateur (66) extrait de l'énergie de l'air de prélèvement et la convertit en énergie électrique via le générateur.

5. Aéronef selon la revendication 4, dans lequel une quantité d'énergie extraite de l'air de prélèvement varie sur la base d'une demande du système d'aéronef.

6. Aéronef selon la revendication 1, dans lequel le système d'aéronef (58) comporte un système d'antigivrage.

7. Aéronef selon la revendication 1, dans lequel le second orifice (64) est configuré pour prélever de l'air d'un compresseur basse pression d'un corps basse pression du moteur.

8. Aéronef selon la revendication 1, dans lequel l'air de prélèvement du second orifice (64) est fourni sélectivement au turbogénérateur (66) lorsqu'une énergie de l'air de prélèvement du second orifice (64) dépasse une demande du système d'aéronef (58) .

9. Aéronef selon la revendication 8, dans lequel l'air de prélèvement du premier orifice (62) est fourni au turbogénérateur (66) lorsqu'une énergie de l'air de prélèvement du second orifice (64) est inférieure à la demande du système d'aéronef (58) et qu'une énergie de l'air de prélèvement du premier orifice (62) dépasse la demande du système d'aéronef (58) .

10. Procédé de fonctionnement du système de prélèvement d'air de l'aéronef selon la revendication 1, le procédé comprenant :
l'aspiration d'air de prélèvement du moteur ;
la détermination d'une demande du système d'aéronef ;
la fourniture sélective de l'air de prélèvement au turbogénérateur à partir de l'un du premier orifice (62) pour extraire de l'air de prélèvement haute pression du moteur ou du second orifice (64) pour extraire de l'air de prélèvement basse pression du moteur ;
l'extraction d'énergie de l'air de prélèvement dans le turbogénérateur ; et
la fourniture de l'air de prélèvement au système d'aéronef.

11. Procédé selon la revendication 10, comprenant en outre la réduction d'au moins l'une d'une pression et d'une température de l'air de prélèvement dans le turbogénérateur.

12. Procédé selon la revendication 10, comprenant en outre :
l'aspiration d'air de prélèvement du premier orifice si une énergie de l'air de prélèvement au premier orifice est supérieure à la demande des un ou plusieurs systèmes d'aéronef ; et
l'aspiration d'air de prélèvement du second orifice si l'énergie de l'air de prélèvement au premier orifice est inférieure à la demande des un ou plusieurs systèmes d'aéronef et si une énergie de l'air de prélèvement au second orifice est supérieure à la demande des un ou plusieurs systèmes d'aéronef.
